# EUROPEAN PATENT SPECIFICATION

(11) **EP 2 653 351 B1**
(45) Date of publication and mention of the grant of the patent: **24.01.2018**
(21) Application number: 11847976.5
(22) Date of filing: 30.11.2011
(51) Int. Cl.: B60R 19/56

(54) **UNDER-RUN PROTECTOR FOR VEHICLE**
UNTERFAHRSCHUTZ FÜR FAHRZEUGE
PROTECTEUR DE DESSOUS DE CAISSE POUR VÉHICULE

(30) Priority: 15.12.2010 JP 2010279368
(43) Date of publication of application: 23.10.2013
(73) Proprietor: UD Trucks Corporation, Saitama 362-8523 (JP)
(72) Inventor: NAKAZAWA, Isamu, Ageo-shi Saitama 362-8523 (JP); SAKURAI, Takamasa, Ageo-shi Saitama 362-8523 (JP)
(74) Representative: Zeitler Volpert Kandlbinder Patent- und Rechtsanwälte Partnerschaft mbB
(86) International application number: PCT/JP2011/006696
(87) International publication number: WO 2012/081176

(56) References cited:
- GB-A- 2 448 826
- JP-A- 11 059 296
- JP-A- 11 059 296
- JP-A- 2003 182 481
- JP-A- 2004 175 228
- JP-A- 2007 186 080
- JP-A- 2008 062 838
- JP-A- 2009 120 095
- JP-A- 2010 018 061
- JP-A- 2010 228 685

## Description

### TECHNICAL FIELD

The present invention relates to an under-run protector disposed in front of or at the rear of a vehicle body frame, and more particularly to the under-run protector for vehicle which is light-weighted and has sufficient strength owing to a change in plate thickness of a portion optimum for strength improvement.

### BACKGROUND ART

At the time of a head-on crash of a vehicle such as a truck and a passenger car, in order to ensure safety of a passenger by preventing the passenger car from sliding into the underside of a front (front surface side) bumper or a rear (rear surface side) bumper of the truck, an under-run protector has been conventionally disposed under the front bumper or the rear bumper via mounting brackets.

In order to improve strength of the under-run protector, it is conceivable to increase a plate thickness of its cross section.

However, simply increasing the plate thickness has a risk of leading to a weight increase.

Therefore, there has been proposed the under-run protector mounting structure for vehicle in which a support part having a plurality of plate-shaped members are interposed between the under-run protector and mounting brackets (refer to, for example, Patent Document 1). Here, the support member is formed to gradually narrow in width in a vehicle width direction from the plate-shaped member closest to the under-run protector toward the plate-shaped member closest to the mounting brackets, and the plate-shaped members are stacked in a vehicle front and rear direction in a leaf spring shape.

There has also been proposed a front under-run protector for a vehicle made of an aluminium alloy which makes crushing strength of the protector itself as high as that of a steel protector and has a higher weight reduction effect than that of the steel protector (refer to, for example, Patent Document 2).

### PRIOR ART DOCUMENTS

### PATENT DOCUMENTS

Patent Document 1: Japanese Unexamined Patent Application Publication No. 2007-186080,
Patent Document 2: Japanese Unexamined Patent Application Publication No. 2004-175228.

An under-run protector according to the preamble of claim 1 is known from JP 11059296-A.

### DISCLOSURE OF THE INVENTION

### PROBLEMS TO BE SOLVED BY THE INVENTION

The under-run protector mounting structure for vehicle of Patent Document 1, however, has problems such as an increase in the number of parts, resulting in the complication of an assembly work, and so on due to the interposition of the support part having the plural plate-shaped members between the under-run protector and the mounting brackets.

Further, the front under-run protector for the vehicle of Patent Document 2 is liable to cause an unnecessary weight increase since, in an aluminium hollow material having a rectangular hollow cross section, a plate thickness of its substantially horizontal surface is larger than a plate thickness of its vertical wall part.

In addition, the under-run protector, if it is a front under-run protector, is generally provided with a bending toward a rear side, and if it is a rear under-run protector, is generally provided with a bending toward a front side, in light of vehicle layout, but the front under-run protector for the vehicle of Patent Document 2 has a problem that forming the bending toward the rear side or the front side is troublesome.

The present invention was made in order to solve such conventional problems and has a proposition to provide an under-run protector which is light-weighted and has sufficient strength owing to a change in plate thickness of a portion optimum for strength improvement.

### MEANS FOR SOLVING THE PROBLEMS

An under-run protector for a vehicle according to the present invention includes a hollow material having a rectangular cross section and mounted on a vehicle body frame via a mounting bracket. A plate thickness of a substantially horizontal surfaces forming the hollow material on the vehicle body frame side with a longitudinal-direction center line region of the hollow material as a boundary is larger than a plate thickness of a substantially horizontal surfaces forming the hollow material opposite the vehicle body frame with the longitudinal-direction center line region of the hollow material as the boundary.

In the present invention, the hollow material includes a pair of substantially vertical surfaces and at least two or more substantially horizontal surfaces.

In the present invention, the substantially horizontal surfaces having the larger plate thickness and forming an outer shape of the under-run protector include a rib projecting outward.

In the present invention, the hollow material has each end portion which is at an outer side of the mounting bracket and curved in toward a rear side or a front side of the vehicle body frame.

In the present invention, the hollow material is a hollow extrusion of an aluminium alloy.

In the present invention, the longitudinal-direction center line region of the hollow material is formed by moving a change point formed on the vehicle body frame side or an opposite side of the vehicle body frame with a longitudinal-direction center line of the hollow material as a boundary by ±10% of a width of the hollow material with respect to the longitudinal-direction center line of the hollow material.

### EFFECT OF THE INVENTION

According to the present invention, by increasing the plate thickness of the substantially horizontal surface on the vehicle body frame side with respect to the longitudinal-direction center which surface acts as a trigger of the deformation of the under-run protector, it is possible to efficiently improve rigidity of the under-run protector with a reduced weight increase.

Further, by increasing a plate thickness of a sectional center front surface, strength increases more by increasing the rear plate thickness and it is possible to prevent an unnecessary weight increase.

Further, in the under-run protector, when a bending is provided toward the rear side or the front side in light of vehicle layout, by not increasing the plate thickness of the substantially horizontal surface opposite the vehicle body frame with respect to the longitudinal-direction center, it is possible to prevent the deterioration of moldability at the time of forming the bending toward the rear side or the front side.

### BRIEF DESCRIPTION OF THE DRAWINGS

FIG. 1 is a cross-sectional view showing a front under-run protector according to a further embodiment.
FIG. 2 is a perspective view showing a state where the front under-run protector in FIG. 1 is mounted on a front side of a vehicle body frame of a truck via mounting brackets.
FIG. 3 is an explanatory view showing a state where the front under-run protector in FIG. 1 and a conventional front under-run protector are tested by using a test RAM.
FIG. 4 is a graph showing test results.
FIG. 5 is a perspective view showing the conventional front under-run protector in which a bulge is caused by the test in FIG. 3.
FIG. 6 is a cross-sectional view showing the front under-run protector before collision and after the collision, taken along the X-X line in FIG. 5.
FIG. 7 is a cross-sectional view showing a front under-run protector according to an embodiment of the present invention.

### BEST MODE FOR CARRYING OUT THE INVENTION

Hereinafter, the present invention will be described based on embodiments shown in the drawings.

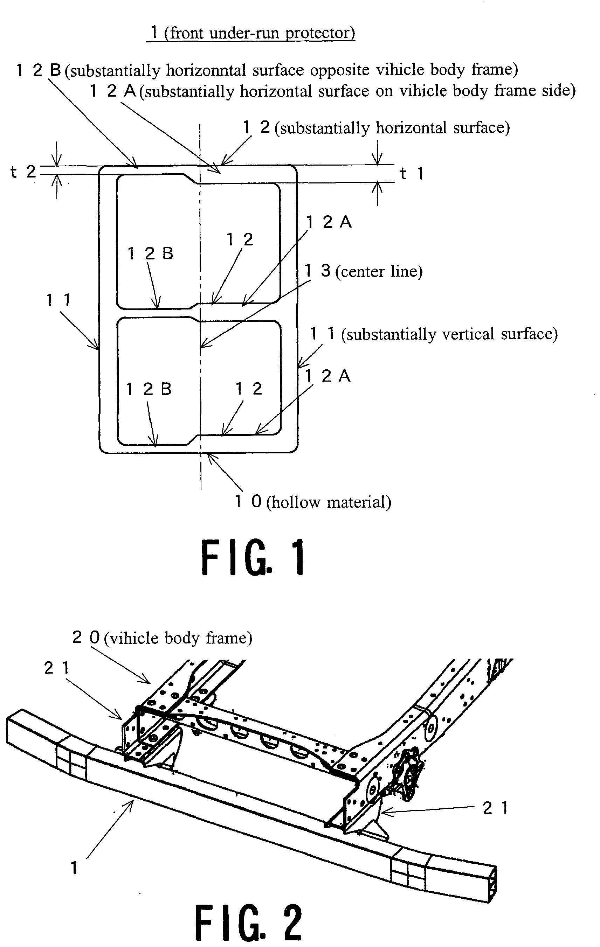

FIG. 1 shows a front under-run protector 1 according to a further embodiment.

The front under-run protector 1 according to this embodiment includes a hollow material 10 made of a hollow extrusion of an aluminium alloy. The hollow material 10 includes a pair of substantially vertical surfaces 11 and three substantially horizontal surfaces 12.

The three substantially horizontal surfaces 12 each have a substantially horizontal surface 12A on a vehicle body frame side with respect to a longitudinal-direction center line 13 of the hollow material 10 and a substantially horizontal surface 12B opposite the vehicle body frame with respect to the longitudinal-direction center line 13 of the hollow material 10, and a plate thickness t1 of the substantially horizontal surface 12A on the vehicle body frame side is larger than a plate thickness t2 of the substantially horizontal surface 12B opposite the vehicle body frame.

The front under-run protector 1 according to this embodiment is mounted on a front side of a vehicle body frame 20 of a truck via mounting brackets 21 as shown in FIG. 2, for instance.

Next, the operation of the front under-run protector 1 according to this embodiment will be described.

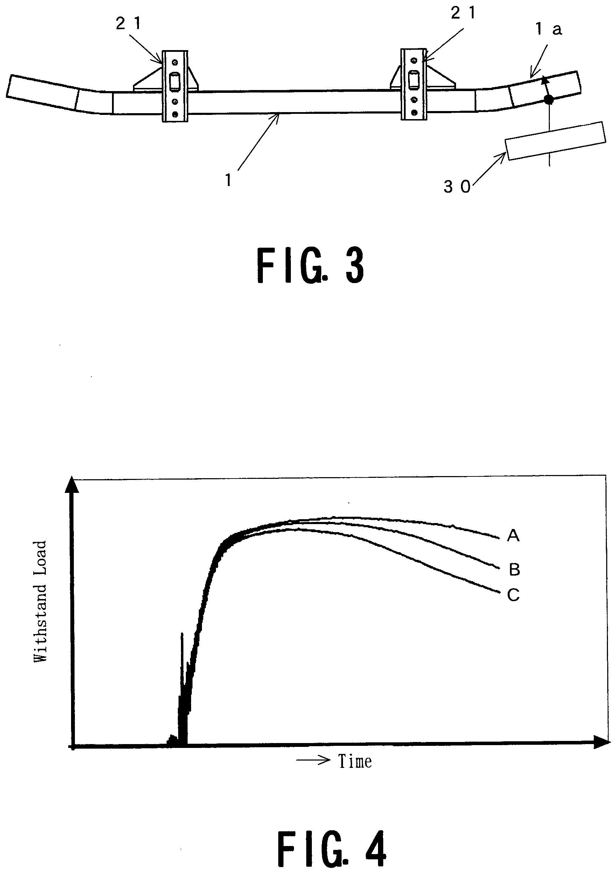

In order to confirm rigidity of the front under-run protector 1 according to this embodiment, while the front under-run protector 1 according to this embodiment was mounted on the mounting brackets 21, 21, a test in which a test RAM (test piece for Charpy impact test) 30 was hit on an end portion 1a bent toward a rear side was conducted with a predetermined load and at a predetermined speed as shown in FIG. 3. Note that the test RAM is prescribed in the ECE regulation, and it is defined that a prescribed load should be applied in parallel to a longitudinal median plane of a vehicle by an appropriate RAM indirectly linked by a universal joint, with the use of a surface which has a 250 mm height or less and a 400 mm width or less and whose vertical edge has a 5±1 mm radius of curvature, for instance.

In the front under-run protector 1 according to this embodiment, the plate thickness t1 of the substantially horizontal surface 12A on the vehicle body frame side is 4.0 mm, the plate thickness t2 of the substantially horizontal surface 12B opposite the vehicle body frame is 3.0 mm, and a plate thickness of the substantially vertical surface 11 is 5.5 mm.

For comparison, a front under-run protector in which a plate thickness t1 of the substantially horizontal surface 12A on the vehicle body frame side was 3.5 mm, the plate thickness t2 of the substantially horizontal surface 12B opposite the vehicle body frame was 3.5 mm, and the plate thickness of the substantially vertical surface 11 was 5.5 mm (hereinafter, referred to as the front under-run protector of a comparative example 1) and a front under-run protector in which the plate thickness t1 of the substantially horizontal surface 12A on the vehicle body frame side was 3.0 mm, the plate thickness t2 of the substantially horizontal surface 12B opposite the vehicle body frame was 4.0 mm, and the plate thickness of a substantially vertical surface 11 was 5.5 mm (hereinafter, referred to as the front under-run protector of a comparative example 2) were prepared, and they were subjected to the test similarly to the front under-run protector 1 according to this embodiment.

The results are shown in FIG. 4.

In FIG 4, the test result of the front under-run protector 1 according to this embodiment is shown as a curve A.

The test result of the front under-run protector of the comparative example 1 is shown as a curve B and the test result of the front under-run protector of the comparative example 2 is shown as a curve C.

It is seen that the front under-run protector 1 according to this embodiment has an improved withstand load as compared with the front under-run protector of the comparative example 1 with the constant plate thickness.

Further, it is seen that the front under-run protector 1 according to this embodiment has an improved withstand load as compared with the front under-run protector of the comparative example 2 in which the plate thickness is changed conversely to that of the front under-run protector 1 according to this embodiment.

From the test result C of the front under-run protector of the comparative example 2, it has been confirmed that rigidity lowers when the plate thickness is changed conversely to that of the front under-run protector 1 according to this embodiment.

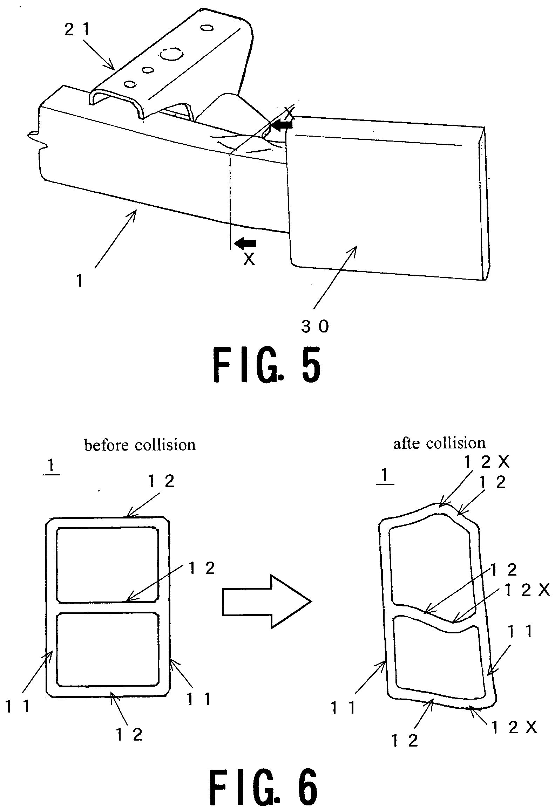

Incidentally, in the front under-run protector of the comparative example 2, it has been confirmed that, when the test RAM (test piece for Charpy impact test) 30 is hit on the end portion 1a bent toward the rear side with the predetermined load and at the predetermined speed, there occurs a phenomenon that portions closer to the mounting brackets 21 bulge as shown in FIG. 5, and curved portions 12X are formed in the substantially horizontal surfaces 12 as shown in FIG. 6 because they cannot withstand the load of the test RAM (test piece for Charpy impact test) 30.

On the other hand, in the front under-run protector 1 according to this embodiment, it is possible to suppress the bulging phenomenon shown in FIG. 5 and FIG. 6.

As described above, it has been confirmed that making the plate thickness t1 of the substantially horizontal surface 12A on the vehicle body frame side larger than the plate thickness t2 of the substantially horizontal surface 12B opposite the vehicle body frame improves the withstand load.

The foregoing embodiment describes the case where the three substantially horizontal surfaces 12 each have the substantially horizontal surface 12A on the vehicle body frame side with respect to the longitudinal-direction center line 13 of the hollow material 10 and the substantially horizontal surface 12B opposite the vehicle body frame with respect to the longitudinal-direction center line 13 of the hollow material 10, but it should be noted that the present invention is not limited to this, and the substantially horizontal surface 12A on the vehicle body frame side and the substantially horizontal surface 12B opposite the vehicle body frame may be formed, with the longitudinal-direction center line 13 of the hollow material 10 being displaced by about ±10% of a width of the hollow material toward the vehicle body frame side or toward the opposite side of the vehicle body frame.

Further, the foregoing embodiment describes the case where the plate thickness t1 of the substantially horizontal surface 12A is 4.0 mm, the plate thickness t2 of the substantially horizontal surface 12B is 3.0 mm, and the plate thickness of the substantially vertical surface 11 is 5.5 mm, assuming a truck with a 4-ton class loadage, but the present invention is not limited to this, and when it is assumed that a vehicle equipped with the under-run protector is a truck with a 10-ton class loadage larger than the aforesaid loadage, the dimension of the plate thickness of each part can be larger on the whole while the same relation of the technical idea is maintained. It has been confirmed that, in the present invention, making a ratio of the plate thickness t1 of the substantially horizontal surface 12A and the plate thickness t2 of the substantially horizontally surface 12B fall within a range of about t1 /t2 = 1.1 to 2.5 improves the withstand load.

The foregoing embodiment describes the front under-run protector 1 with a cross-sectional shape of a box in which the single substantially horizontal surface 12 is provided substantially in the middle between the two substantially horizontal surfaces 12, but the present invention is not limited to this, and for example, it may be a front under-run protector with a cross-sectional shape of a box in which a substantially horizontal surface is not provided substantially in the middle between two substantially horizontal surfaces 12 or may be a front under-run protector with a cross-sectional shape of a box in which two substantially horizontal surfaces 12 are provided between two substantially horizontal surfaces 12.

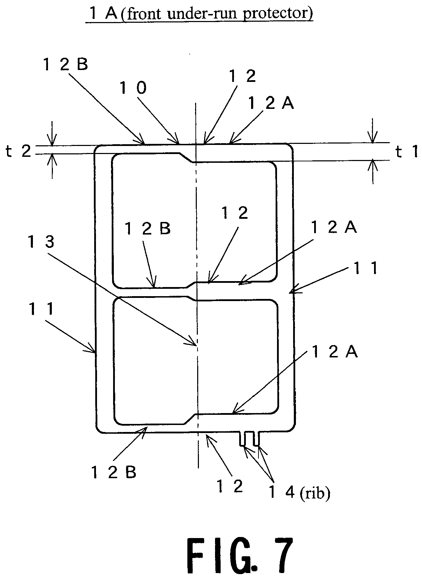

The front under-run protector of the present invention comprises one rib 14 or more on the substantially horizontal surface 12A on the vehicle body frame side as in a front under-run protector 1A shown in FIG. 7, strength of the substantially horizontal surface 12A on the vehicle body frame side may be reinforced.

Further, the foregoing embodiment describes the front under-run protector 1, but the present invention is not limited to this and may be applied to, for example, a rear under-run protector.

### EXPLANATION OF REFERENCE NUMERALS

1, 1A front under-run protector
1a end portion bent toward rear side, of front under-run protector 1
10 hollow material
11 substantially vertical surface
12 substantially horizontal surface
13 center line
12A substantially horizontal surface on vehicle body frame side with respect to longitudinal-direction center line 13 of hollow material 10
12B substantially horizontal surface opposite vehicle body frame with respect to longitudinal-direction center line 13 of hollow material 10
1 2X curved portion
20 vehicle body frame
21 mounting bracket
t1 plate thickness of substantially horizontal surface 12A on vehicle body frame side with respect to longitudinal-direction center line 13 of hollow material 10
t2 plate thickness of substantially horizontal surface 12B opposite vehicle body frame with respect to longitudinal-direction center line 13 of hollow material 10

## Claims

1. Under-run protector mounted on a vehicle body frame (20) via a mounting bracket (21), comprising
a hollow extrusion (10) having a rectangular cross section, wherein the hollow extrusion (10) includes at least two substantially horizontal surfaces (12, 12 A, 12 B), whereas the hollow extrusion (10) is split by a center line region (13) in a first side adjacent the body frame and a second side opposite the body frame, whereby a plate thickness (t1) of the at least two substantially horizontal surfaces (12 A) on one side is different from a plate thickness (t2) of the at least two substantially horizontal surfaces (12 B) on the opposite side,
**characterized in that** the plate thickness (t1) of the at least two substantially horizontal surfaces (12A) on the vehicle body frame (20) side is larger than the plate thickness (t2) of the at least two substantially horizontal surfaces (12B) opposite the vehicle body frame (20), and the substantially horizontal surfaces (12A) having the larger plate thickness (t1) and forming an outer shape of the under-run protector include a rib (14) projecting outward.

2. Under-run protector according to claim 1, **characterized in that** the hollow extrusion (10) includes a pair of substantially vertical surfaces (11) and the at least two substantially horizontal surfaces (12, 12 A, 12 B).

3. Under-run protector according to claim 1 or 2, **characterized in that** the hollow extrusion (10) has each end portion which is at an outer side of the mounting bracket (21) and curved in toward one of a rear side and a front side of the vehicle body frame (20).

4. Under-run protector according to any one of claims 1 to 3, **characterized in that** the hollow extrusion (10) is a hollow extrusion of an aluminium alloy.

5. Under-run protector according to any one of claims 1 to 4, **characterized in that** the longitudinal-direction center line (13) region of the hollow extrusion (10) is formed by moving a change point by ±10% of a width of the hollow extrusion (10) with respect to the longitudinal-direction center line (13) of the hollow extrusion (10), the change point is formed on one of the vehicle body frame side (20) and an opposite side of the vehicle body frame (20) with the longitudinal-direction center line (13) of the hollow extrusion (10) as a boundary.

## Patentansprüche

1. Unterfahrschutz, der durch einen Befestigungsbügel (21) an einem Fahrzeug-Karoserierahmen (20) montiert ist, umfassend ein Hohlmaterial (10), das einen rechteckigen Querschnitt aufweist und wenigstens zwei im wesentlichen waagerechte Oberflächen (12, 12A, 12B) hat, wobei das Hohlmaterial (10) durch einen Mittellinienbereich (13) in eine erste Seite neben dem Karosserierahmen und eine zweite Seite gegenüber dem Karosserierahmen aufgeteilt ist, wodurch sich eine Plattendicke (t1) der wenigstens zwei im wesentlichen waagerechten Oberflächen (12A) auf der einen Seite von einer Plattendicke (t2) der wenigstens zwei im wesentlichen waagerechten Oberflächen (12B) auf der gegenüberliegenden Seite unterscheidet, **dadurch gekennzeichnet, daß** die Plattendicke (t1) der wenigstens zwei im wesentlichen waagerechten Oberflächen (12A) auf der Seite des Fahrzeug-Karosserierahmens (20) größer ist als die Plattendicke (t2) der wenigstens zwei im wesentlichen waagerechten Oberflächen (12B) gegenüber dem Fahrzeug-Karosserierahmen (20), und daß die im wesentlichen waagerechten Oberflächen (12A), die die größere Plattendicke (t1) aufweisen und die eine größere Form des Unterfahrschutzes bilden, eine nach außen ragende Rippe (14) aufweisen.

2. Unterfahrschutz nach Anspruch 1, **dadurch gekennzeichnet, daß** das Hohlmaterial (10) ein Paar im wesentlichen vertikale Oberflächen (11) und die wenigstens zwei im wesentlichen waagerechten Oberflächen (12, 12A, 12B) aufweist.

3. Unterfahrschutz nach Anspruch 1 oder 2, **dadurch gekennzeichnet, daß** das Hohlmaterial (10) jeden Endabschnitt aufweist, der sich an einer Außenseite des Befestigungsbügels (21) befindet und gegen eine Rückseite oder eine Vorderseite des Fahrzeug-Karosserierahmens (20) gekrümmt ist.

4. Unterfahrschutz nach einem der Ansprüche 1 bis 3, **dadurch gekennzeichnet, daß** das Hohlmaterial (10) eine hohle Extrusion einer Aluminiumlegierung ist.

5. Unterfahrschutz nach einem der Ansprüche 1 bis 4, **dadurch gekennzeichnet, daß** der Längsrichtungs-Mittellinienbereich (13) des Hohlmaterials (10) durch Bewegen eines Änderungspunktes um ± 10 % einer Breite des Hohlmaterials (10) in Bezug auf die Längsrichtungs-Mittellinie (13) des Hohlmaterials (10) gebildet ist, wobei der Änderungspunkt auf einer Fahrzeug-Karosserierahmenseite (20) und einer gegenüberliegenden Seite des Fahrzeug-Karosserierahmens (20) ausgebildet ist, und zwar mit der Längsrichtungs-Mittellinie (13) des Hohlmaterials (10) als Begrenzung.

## Revendications

1. Protecteur de dessous de caisse monté sur un châssis (20) d'un corps de véhicule via une platine de montage (21), comprenant
une pièce extrudée creuse (10) ayant une section transversale rectangulaire, dans lequel la pièce extrudée creuse (10) inclut au moins deux surfaces sensiblement horizontales (12, 12A, 12B), tandis que la pièce extrudée creuse (10) est fendue par une région de ligne centrale (13) dans un premier côté adjacent au châssis et un second côté à l'opposé du châssis,
de sorte qu'une épaisseur de plaque (t1) desdites au moins deux surfaces sensiblement horizontales (12A) sur un côté est différente d'une épaisseur de plaque (t2) desdites au moins deux surfaces sensiblement horizontales (12B) sur le côté opposé,
**caractérisé en ce que** l'épaisseur de plaque (t1) desdites au moins deux surfaces sensiblement horizontales (12A) sur le côté du châssis (20) du véhicule est plus élevée que l'épaisseur de plaque (t2) desdites au moins deux surfaces sensiblement horizontales (12B) à l'opposé du châssis (20) du véhicule, et les surfaces sensiblement horizontales (12A) qui ont la plus forte épaisseur de plaque (t1) et qui forment une conformation extérieure du protecteur de dessous de caisse incluent une nervure (14) qui se projette vers l'extérieur.

2. Protecteur de dessous de caisse selon la revendication 1, **caractérisé en ce que** la pièce extrudée creuse (10) inclut une paire de surfaces sensiblement verticales (11) et lesdites au moins deux surfaces sensiblement horizontales (12, 12A, 12B).

3. Protecteur de dessous de caisse selon la revendication 1 ou 2, **caractérisé en ce que** la pièce extrudée creuse (10) est telle que chaque portion terminale se trouve sur un côté extérieur de la platine de montage (21) et est incurvée soit vers le côté arrière soit vers le côté avant du châssis (20) du corps de véhicule.

4. Protecteur de dessous de caisse selon l'une quelconque des revendications 1 à 3, **caractérisé en ce que** la pièce extrudée creuse (10) est une pièce extrudée creuse en alliage d'aluminium.

5. Protecteur de dessous de caisse selon l'une quelconque des revendications 1 à 4, **caractérisé en ce que** la région sur la ligne centrale (13) en direction longitudinale de la pièce extrudée creuse (10) est formée en déplaçant un point de changement sur ± 10 % d'une largeur de la pièce extrudée creuse (10) par rapport à la ligne centrale (13) en direction longitudinale de la pièce extrudée creuse (10), le point de changement étant formé soit sur le côté (20) vers le châssis du véhicule soit sur un côté opposé du châssis (20) du véhicule, avec la ligne centrale (13) en direction longitudinale de la pièce extrudée creuse (10) à titre de frontière.
